# EUROPÄISCHE PATENTANMELDUNG

(11) **EP 4 296 332 A1**
(43) Veröffentlichungstag der Anmeldung: **27.12.2023**
(21) Anmeldenummer: 22180643.3
(22) Anmeldetag: 23.06.2022
(51) Int. Cl.: C09J 163/00, C08G 59/50, C08G 59/62

(54) **ZWEI-KOMPONENTEN-SYSTEM FÜR KLEBEANWENDUNGEN**

(71) Anmelder: Hilti Aktiengesellschaft, 9494 Schaan (LI)
(72) Erfinder: Plenk, Christian, 86916 Kaufering (DE); Fischer, Philipp, 80797 München (DE); Meier, Christoph, 63486 Bruchköbel (DE)
(74) Vertreter: Hilti Aktiengesellschaft Corporate Intellectual Property

(57) **Zusammenfassung**

Es wird ein Zwei-Komponenten-System für Klebeanwendungen beschrieben, welches eine Komponente (A), umfassend ein Epoxid mit zwei oder mehr Epoxidgruppen, und eine Komponente (B), umfassend ein tertiäres Amin, umfasst, wobei das Zwei-Komponenten-System kein primäres und kein sekundäres Amin umfasst.

## Beschreibung

Die Erfindung betrifft Zwei-Komponenten-Systeme für Klebeanwendungen, daraus hergestellte chemische Dübel und ausgehärtete Systeme sowie zugehörige Verfahren und Verwendungen.

### Stand der Technik

Die vorliegende Erfindung beschäftigt sich ganz allgemein mit Klebeanwendungen. Für Klebeanwendungen kommen oftmals epoxidbasierte Zwei-Komponenten-Systeme zum Einsatz. Die erste Komponente eines solchen Systems, auch als Komponente (A) bezeichnet, enthält typischerweise eine oder mehrere Epoxidverbindungen. Die zweite Komponente eines solchen Systems, auch als Komponente (B) bezeichnet, enthält typischerweise sogenannte Härterkomponenten, die nach dem Vermischen der Komponenten (A) und (B) zum Aushärten der Komponente (A) dienen.

Eine besondere Anwendung von epoxidbasierten Zwei-Komponenten-Systemen sind sogenannte chemische Dübel. Chemische Dübel ermöglichen im Bauwesen regelmäßig feste Verankerungen in Beton, Mauerwerk oder Holz. Bei einer solchen Anwendung im Bauwesen ist nach Vermischen seiner Komponenten eine schnelle Aushärtung des Zwei-Komponenten-Systems erwünscht. Die zum Aushärten führende Reaktion zwischen den Komponenten (A) und (B) ist regelmäßig exotherm und hat damit eine Temperaturerhöhung zur Folge. Eine schnelle Aushärtung zeigt sich dann beispielsweise in einer kurzen Zeit t_{+10K}, welche jene Zeit ist, nach der eine Temperaturerhöhung um 10 K stattgefunden hat. Eine schnelle Aushärtung zeigt sich ferner beispielsweise in der Zeit t_{Tmax}, welche jene Zeit ist, nach der ein Temperaturmaximum Tₘₐₓ erreicht ist.

Für ein Zwei-Komponenten-System für Klebeanwendungen, insbesondere im Bauwesen, ist es ferner wünschenswert, dass innerhalb möglichst kurzer Zeit zudem große Härten eines daraus hergestellten ausgehärteten Systems erzielt werden. Solche großen Härten zeigen sich beispielsweise in bereits nach kurzer Zeit gemessenen großen Shore-Härten.

Außerdem ist es für ein Zwei-Komponenten-System für Klebeanwendungen, insbesondere im Bauwesen, wünschenswert, dass daraus hergestellte ausgehärtete Systeme auch bei großer Beanspruchung nicht versagen. Anders gesagt ist für solche Systeme eine hohe Versagenslast wünschenswert, die sich beispielsweise in einer hohen Referenzverbundspannung zeigt.

Die Zwei-Komponenten-Systeme des Standes der Technik sind teilweise noch verbesserungswürdig, insbesondere im Hinblick auf deren Aushärtezeiten sowie damit erzielbarer Härten und Versagenslasten.

### Aufgabe der Erfindung

Der Erfindung liegt als Aufgabe zugrunde, ein Zwei-Komponenten-System für Klebeanwendungen bereitzustellen, welches Nachteile des Stands der Technik zumindest teilweise und möglichst ganz überwindet.

Es ist dabei eine besondere Aufgabe der Erfindung, ein Zwei-Komponenten-System für Klebeanwendungen bereitzustellen, welches bei der Anwendung schnell aushärtet.

Es ist dabei auch eine Aufgabe der Erfindung, ein Zwei-Komponenten-System für Klebeanwendungen bereitzustellen, welches schnell zu einem ausgehärteten System mit großer Härte führen kann.

Es ist ferner eine Aufgabe der Erfindung, ein Zwei-Komponenten-System für Klebeanwendungen bereitzustellen, welches zu einem ausgehärteten System mit großer Versagenslast führen kann.

Es ist eine weitere Aufgabe der Erfindung, einen chemischen Dübel bereitzustellen, welcher Nachteile des Stands der Technik zumindest teilweise und möglichst ganz überwindet.

Es ist eine weitere Aufgabe der Erfindung, ein ausgehärtetes System bereitzustellen, welches Nachteile des Stands der Technik zumindest teilweise und möglichst ganz überwindet.

Es ist eine weitere Aufgabe der Erfindung, ein Verfahren zur Herstellung eines chemischen Dübels bereitzustellen, welches Nachteile des Stands der Technik zumindest teilweise und möglichst ganz überwindet.

Es ist eine weitere Aufgabe der Erfindung, eine Verwendung eines Zwei-Komponenten-Systems für Klebeanwendungen bereitzustellen, welche Nachteile des Stands der Technik zumindest teilweise und möglichst ganz überwindet.

### Offenbarung der Erfindung

Überraschenderweise wird die der Erfindung zugrunde liegende Aufgabe gelöst durch Zwei-Komponenten-Systeme für Klebeanwendungen, chemische Dübel, ausgehärtete Systeme, Verfahren und Verwendungen gemäß den Patentansprüchen.

Gegenstand der Erfindung ist ein Zwei-Komponenten-System für Klebeanwendungen, umfassend:
eine Komponente (A), umfassend ein Epoxid mit zwei oder mehr Epoxidgruppen, und
eine Komponente (B), umfassend ein tertiäres Amin,
wobei das Zwei-Komponenten-System kein primäres und kein sekundäres Amin umfasst.

In einem Zwei-Komponenten-System für Klebeanwendungen gemäß der vorliegenden Erfindung liegen die Komponenten (A) und (B) gemeinsam vor bzw. bilden ein Kit. Die Komponenten (A) und (B) müssen nicht physisch vermischt sein. Eine physische Mischung der Komponenten (A) und (B) wird hier regelmäßig als chemischer Dübel bezeichnet.

Das Aushärten von Epoxiden mittels tertiärer Amine über einen katalytischen Härtungsmechanismus ist grundsätzlich bekannt. Dabei werden die tertiären Amine allerdings regelmäßig nur als Katalysator und nur in Kombination mit mindestens einem primären oder sekundären Amin eingesetzt. Demgegenüber umfasst das Zwei-Komponenten-System gemäß der vorliegenden Erfindung kein primäres und kein sekundäres Amin. Anders formuliert enthält das erfindungsgemäße Zwei-Komponenten-System für Klebeanwendungen keinen Amin-Wasserstoff. Überraschenderweise kann ein Zwei-Komponenten-System für Klebeanwendungen gemäß der vorliegenden Erfindung trotz vollständigen Fehlens von primären oder sekundären Aminen als potentiellen Reaktionspartnern des Epoxids in der Komponente (A) kurze Aushärtezeiten aufweisen. Gleichzeitig kann das daraus hergestellte ausgehärtete System bereits nach kurzer Zeit große Härten und große Versagenslasten aufweisen.

Erfindungsgemäß ist es bevorzugt, dass das von der Komponente (A) umfasste Epoxid und das von der Komponente (B) umfasste tertiäre Amin in einem nicht-stöchiometrischen Verhältnis vorliegen. Nicht-stöchiometrisch bedeutet dabei, dass pro Mol Epoxid in Komponente (A) nicht genau ein Mol tertiäres Amin in Komponente (B) vorliegt. Erfindungsgemäß ist es bevorzugt, dass das von der Komponente (A) umfasste Epoxid im Überschuss vorliegt, also pro Mol Epoxid in Komponente (A) weniger als ein Mol tertiäres Amin in Komponente (B) vorliegt. Wenn das Epoxid in Komponente (A) und das tertiäre Amin in Komponente (B) in einem nicht-stöchiometrischen Verhältnis vorliegen, insbesondere wenn mehr Epoxid als tertiäres Amin vorliegt, kann das erfindungsgemäße Zwei-Komponenten-System besonders schnell aushärten. Auf diese Weise können auch größere Härten und größere Versagenslasten des resultierenden ausgehärteten Systems erzielt werden.

Erfindungsgemäß ist es bevorzugt, dass das tertiäre Amin basierend auf dem Gesamtgewicht des erfindungsgemäßen Zwei-Komponenten-Systems in einem Anteil von 0,5 bis 30 Gew.-% enthalten ist, mehr bevorzugt in einem Anteil von 0.5 bis 20 Gew.-%, noch mehr bevorzugt in einem Anteil von 0.5 bis 15 Gew.-%, weitergehend bevorzugt in einem Anteil von 1 bis 10 Gew.-% und am meisten bevorzugt in einem Anteil von 3 bis 6 Gew.-%. In bekannten Zwei-Komponenten-Systemen werden tertiäre Amine regelmäßig allenfalls als Katalysator und damit typischerweise in sehr geringen Mengen eingesetzt. Mit den erfindungsgemäß bevorzugt eingesetzten großen Mengen an tertiärem Amin von 0,5 bis 30 Gew.-% kann das Zwei-Komponenten-System besonders schnell aushärten. Zudem kann das daraus hergestellte ausgehärtete System bereits nach kurzer Zeit sehr hart sein und große Lasten aushalten, ohne zu versagen.

Erfindungsgemäß ist es bevorzugt, dass das tertiäre Amin zwei oder mehr tertiäre Aminogruppen aufweist. Wenn das tertiäre Amin zwei oder mehr tertiäre Aminogruppen aufweist, kann das erfindungsgemäße Zwei-Komponenten-System schnell aushärten. Zudem kann das daraus hergestellte ausgehärtete System große Härten und/oder große Versagenslasten aufweisen.

Erfindungsgemäß ist es bevorzugt, dass das tertiäre Amin aus 1,4-Diazabicyclo[2.2.2]octan, 1,2-Dimethylimidazol, 1-Benzyl-2-Methylimidazol, 8-Diazabicyclo[5.4.0]undec-7-en, N,N,N',N'-Tetramethylethylendiamin, N,N,N',N",N"-Pentamethyldiethylentriamin und 2,4,6-Tris(dimethylaminomethyl)phenol ausgewählt ist. Erfindungsgemäß ist es besonders bevorzugt, dass das tertiäre Amin 1,4-Diazabicyclo[2.2.2]octan ist, welches auch als Triethylendiamin bezeichnet wird. Wenn das tertiäre Amin aus den aufgeführten Verbindungen ausgewählt ist, und insbesondere wenn das tertiäre Amin 1,4-Diazabicyclo[2.2.2]octan ist, kann das erfindungsgemäße Zwei-Komponenten-System sehr schnell aushärten. Gleichzeitig kann das resultierende ausgehärtete System bereits nach kurzer Zeit sehr hart sein. Zudem kann das resultierende ausgehärtete System große Versagenslasten aufweisen.

Die Strukturen der erfindungsgemäß bevorzugt eingesetzten Amine sind nachfolgend wiedergegeben:

| **Tertiäres Amin** | **Struktur** |
|---|---|
| 1,4-Diazabicyclo[2.2.2]octan | 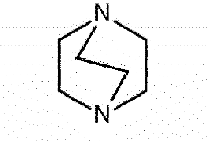 |
| 1,2-Dimethylimidazol | 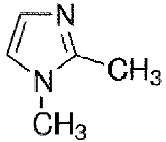 |
| 1-Benzyl-2-Methylimidazol | 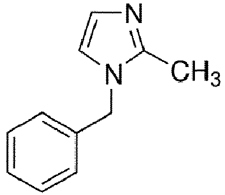 |
| 8-Diazabicyclo[5.4.0]undec-7 -en | 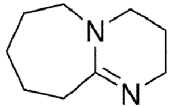 |
| N,N,N',N'-Tetramethylethylendiamin | 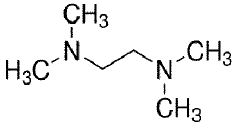 |
| N,N,N',N",N"-Pentamethyldiethylentriamin | 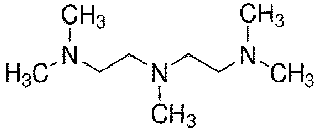 |
| 2,4,6-Tris(dimethylaminomethyl)phenol | 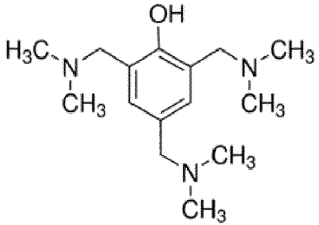 |

Erfindungsgemäß ist es bevorzugt, dass die Komponente (B) einen einwertigen, zweiwertigen oder mehrwertigen Alkohol umfasst, bevorzugt einen zweiwertigen Alkohol, insbesondere Dipropylenglycol. Unter einem mehrwertigen Alkohol wird hier ein drei- oder höherwertiger Alkohol verstanden. Wenn die Komponente (B) einen einwertigen, zweiwertigen oder mehrwertigen Alkohol umfasst, können mit dem erfindungsgemäßen Zwei-Komponenten-System Aushärtezeiten gezielt verlangsamt werden bzw. die Gelzeiten schneller werden. Bevorzugt umfasst die Komponente (B) einen zweiwertigen Alkohol, insbesondere Dipropylenglycol.

Erfindungsgemäß ist es auch bevorzugt, dass die Komponente (B) Benzylalkohol umfasst. Wenn die Komponente (B) Benzylalkohol umfasst, können mit dem erfindungsgemäßen Zwei-Komponenten-System ebenfalls besonders kurze Aushärtezeiten erzielt werden.

Erfindungsgemäß ist es bevorzugt, dass die Komponente (B) einen mineralischen Füllstoff umfasst, insbesondere Quarz, Quarzmehl, Quarzstaub, Quarzsand, Quarzpulver, Ziegelmehl, Sand, Kieselsäure, Kalksteinfüllstoffe, zerkleinerte Steine, Kies, Kiesel, Ton, Flugasche, Carbonatverbindungen, Pigmente, Titanoxid, leichten Füllstoffe, harte Füllstoffe, wie beispielsweise Korund, und/oder Mischungen davon. Wenn die Komponente (B) einen mineralischen Füllstoff umfasst, kann das aus dem erfindungsgemäßen Zwei-Komponenten-System hergestellte ausgehärtete System besonders hart sein und große Versagenslasten aufweisen, ohne dass die Aushärtezeit verlängert wird. Diese Wirkungen können besonders ausgeprägt sein, wenn der mineralische Füllstoff Quarz oder Kieselsäure ist.

Erfindungsgemäß ist es bevorzugt, dass die Komponente (B) ein Thiol umfasst. In diesem Fall dient das Thiol in Komponente (B) als zusätzliche Härterkomponente (Co-Härter). Wenn die Komponente (B) ein Thiol umfasst, können mit dem erfindungsgemäßen Zwei-Komponenten-System besonders kurze Aushärtezeiten erzielt werden. Zudem können schnell große Härten des daraus hergestellten ausgehärteten Systems erzielt werden.

Erfindungsgemäß ist es bevorzugt, dass das tertiäre Amin 1,4-Diazabicyclo[2.2.2]octan ist, welches basierend auf dem Gesamtgewicht des Zwei-Komponenten-Systems in einem Anteil von 0,5 bis 30 Gew.-% enthalten ist, und wobei die Komponente (B) Dipropylenglycol umfasst. In diesem Fall kann das erfindungsgemäße Zwei-Komponenten-System besonders schnell aushärten und kann das daraus resultierende ausgehärtete System besonders hart sein und zudem große Versagenslasten aufweisen.

Erfindungsgemäß ist es bevorzugt, dass das Zwei-Komponenten-System nach Vermengen der Komponenten (A) und (B) eine Zeit t_{+10K}, gemessen nach dem hierin beschriebenen Messverfahren, von ≤ 120 min (120 Minuten), mehr bevorzugt von ≤ 95 min, noch mehr bevorzugt von ≤ 20 min und am meisten bevorzugt von ≤ 10 min aufweist. Mit solch einer kurzen Zeit t_{+10K} kann das erfindungsgemäße Zwei-Komponenten-System für Verwendungen im Bauwesen besonders geeignet sein und insbesondere feste Verankerungen in Beton, Mauerwerk und/oder Holz ermöglichen.

Erfindungsgemäß ist es bevorzugt, dass das Zwei-Komponenten-System nach Vermengen der Komponenten (A) und (B) eine Zeit t_{Tmax}, gemessen nach dem hierin beschriebenen Messverfahren, von ≤ 200 min (200 Minuten), mehr bevorzugt von ≤ 90 min, noch mehr bevorzugt von ≤ 50 min und am meisten bevorzugt von ≤ 20 min aufweist. Mit solch einer kurzen Zeit t_{Tmax} kann das erfindungsgemäße Zwei-Komponenten-System für Verwendungen im Bauwesen besonders geeignet sein und insbesondere feste Verankerungen in Beton, Mauerwerk und/oder Holz ermöglichen.

Erfindungsgemäß ist es bevorzugt, dass das Zwei-Komponenten-System nach Vermengen der Komponenten (A) und (B) nach 24 Stunden (24 h) eine ShoreD-Härte, gemessen nach dem hierin beschriebenen Messverfahren, von ≥ 70, mehr bevorzugt von ≥ 75, noch mehr bevorzugt von ≥ 80 und am meisten bevorzugt von ≥ 85 aufweist. Mit solch einer großen ShoreD-Härte nach bereits 24 Stunden kann das erfindungsgemäße Zwei-Komponenten-System für Verwendungen im Bauwesen besonders geeignet sein und insbesondere feste Verankerungen in Beton, Mauerwerk und/oder Holz ermöglichen.

Erfindungsgemäß ist es bevorzugt, dass das Zwei-Komponenten-System eine ShoreD-Härte, gemessen nach dem hierin beschriebenen Messverfahren, von mindestens 50 bereits nach 15 Stunden (15 h), mehr bevorzugt bereits nach 7 Stunden, noch mehr bevorzugt bereits nach 6 Stunden und am meisten bevorzugt bereits nach 4 Stunden nach dem Vermengen der Komponenten (A) und (B) erreicht. Mit solch einer schnell erreichten großen ShoreD-Härte kann das erfindungsgemäße Zwei-Komponenten-System für Verwendungen im Bauwesen besonders geeignet sein und insbesondere feste Verankerungen in Beton, Mauerwerk und/oder Holz ermöglichen.

Erfindungsgemäß ist es bevorzugt, dass das Zwei-Komponenten-System eine Referenzverbundspannung (72 h), gemessen nach dem hierin beschriebenen Messverfahren, von ≥ 10 N/mm², mehr bevorzugt von ≥ 15 N/mm², noch mehr bevorzugt von ≥ 20 N/mm² und am meisten bevorzugt von ≥ 25 N/mm² aufweist. Mit solch einer großen Referenzverbundspannung kann das erfindungsgemäße Zwei-Komponenten-System für Verwendungen im Bauwesen besonders geeignet sein und insbesondere feste Verankerungen in Beton, Mauerwerk und/oder Holz ermöglichen.

Gegenstand der Erfindung ist außerdem ein chemischer Dübel, der eine physische Mischung der Komponenten (A) und (B) eines hier beschriebenen Zwei-Komponenten-Systems für Klebeanwendungen umfasst. Bei einem solchen chemischen Dübel ist die Mischung der Komponenten (A) und (B) nicht vollständig ausgehärtet, d. h. die Reaktion zwischen der Komponente (A) und der Komponente (B) ist nicht vollständig abgeschlossen. Die bevorzugten Ausführungsformen des hier beschriebenen Zwei-Komponenten-Systems für Klebeanwendungen einschließlich der Ansprüche sind in gleicher Weise für den chemischen Dübel gemäß der vorliegenden Erfindung bevorzugt.

Gegenstand der Erfindung ist außerdem ein ausgehärtetes System, das einen hier beschriebenen chemischen Dübel umfasst. In einem solchen ausgehärteten System ist die Mischung der Komponenten (A) und (B) ausgehärtet, und die Reaktion zwischen Komponente (A) und Komponente (B) ist bevorzugt vollständig abgeschlossen. Die bevorzugten Ausführungsformen des hier beschriebenen Zwei-Komponenten-Systems für Klebeanwendungen einschließlich der Ansprüche sind in gleicher Weise für das ausgehärtete System gemäß der vorliegenden Erfindung bevorzugt.

Gegenstand der Erfindung ist außerdem ein Verfahren zur Herstellung eines chemischen Dübels aus einem hier beschriebenen Zwei-Komponenten-System für Klebeanwendungen, umfassen die Schritte:
- getrenntes Bereitstellen von Komponente (A) und Komponente (B), und
- anschließendes Vermischen von Komponente (A) und Komponente (B).

Die bevorzugten Ausführungsformen des hier beschriebenen Zwei-Komponenten-Systems für Klebeanwendungen einschließlich der Ansprüche sind in gleicher Weise für das Verfahren zur Herstellung eines chemischen Dübels gemäß der vorliegenden Erfindung bevorzugt.

Gegenstand der Erfindung ist außerdem die Verwendung eines hier beschriebenen Zwei-Komponenten-Systems für Klebeanwendungen zum chemischen Verkleben oder Verankern, bevorzugt zum chemischen Verankern in einem mineralischen Substrat, insbesondere in Beton oder Mauerwerk, und/oder Holz. Die bevorzugten Ausführungsformen des hier beschriebenen Zwei-Komponenten-Systems für Klebeanwendungen einschließlich der Ansprüche sind in gleicher Weise für die Verwendung gemäß der vorliegenden Erfindung bevorzugt.

### Ausführungsbeispiele

### Verwendete Komponenten

Als Epoxidharzkomponente wurden die A-Komponente der im Handel unter den Bezeichnungen Hilti HIT-RE 500 V3 und Hilti HIT-RE 100 erhältlichen Zwei-Komponenten-Systeme (A-Komponente enthält jeweils aus Bisphenol und Epichlorhydrin hergestelltes Epoxidharz) und das im Handel unter der Bezeichnung Araldite^{™} BY 20157 CH erhältliche Bisphenol A/F-basierte Epoxidharz verwendet. Als Härterkomponente wurde die B-Komponente des im Handel unter der Bezeichnung Hilti HIT-RE 100 erhältlichen Zwei-Komponenten-Systems verwendet. Als Katalysatoren (Härterkomponenten) wurden 2-Ethylimidazol, 1,2-Dimethylimidazol, 1-Benzyl-2-Methylimidazol, 1-Ethyl-3-Methylimidazoliumdiethylphosphat, 8-Diazabicyclo[5.4.0]undec-7-en, 1,4-Diazabicyclo[2.2.2]octan, N,N,N',N'-Tetramethylethylendiamin, N,N,N',N",N"-Pentamethyldiethylentriamin (jeweils von Sigma Aldrich), 2,4,6-Tris(dimethylaminomethyl)phenol (als Ancamine^{™} K54 der Firma Air Products) und eine Mischung aus 33% 1,4-Diazabicyclo[2.2.2]octan und 67% Dipropylenglycol (als PUR 812 der Firma Rühl Puromer GmbH oder als DABCO 33-LV von Sigma Aldrich) verwendet. Als Füllstoff wurde Quarz (Millisil^{™} W12 der Firma Quarzwerke Frechen) und als Verdicker Kieselsäure (Cab-O-Sil^{™} TS- 720 der Firma Cabot Rheinfelden) verwendet (auf die gemeinschaftlich auch als mineralische Füllstoffe Bezug genommen wird). Als Lösungsmittel wurden Dipropylenglycol und Benzylalkohol (jeweils von Sigma Aldrich) verwendet. Als Aminhärter wurden 1,3-Cyclohexandimethanamin (1,3-BAC der Firma Itochu Deutschland), Isophorondiamin (Vestamin IPD der Firma Evonik Degussa GmbH) und m-Xylylendiamin (Sigma Aldrich) verwendet. Als Thiolhärter wurde Pentaerythritoltetra(3-mercaptopropionat) (Thiocure^{®} PETMP der Firma Bruno Bock Chemische Fabrik GmbH & Co.) verwendet.

### Herstellung von chemischen Dübeln

Die flüssigen und/oder festen A- und B-Komponenten wurde jeweils im Speedmixer (DAC-600 der Firma Hauschild) für 30 s bei 1500 U/min gemischt. B-Komponenten, welche Füllstoffe enthalten, wurden zuvor im Speedmixer für 30 s bei 1500 U/min vorgemischt.

### Messmethoden

### Bestimmung von ShoreD Härten

Die ShoreD Härte einer 0,5 cm dünnen Schicht des ausgehärteten Zwei-Komponenten-Systems wurde bei Raumtemperatur mit dem Härteprüfgerät HBD 100-0 der Firma Sauter GmbH gemessen. Über die zeitliche Entwicklung der ShoreD Härte kann die Aushärtezeit der Zwei-Komponenten-Systeme abgeschätzt werden.

### Bestimmung von Gelzeiten

100 g einer Mischung der Komponenten A und B wurden bei Raumtemperatur im Speedmixer-Becher für 30 s vermischt und die Temperaturänderung wurde anschließend mit einem Temperaturfühler gemessen und mit einem Geltimer aufgezeichnet. Es wurden t_{+10K} (Zeit, nach der eine Temperaturerhöhung um 10 K stattgefunden hat), Tₘₐₓ (erreichtes Temperaturmaximum) und t_{Tmax} (Zeit, nach der das Temperaturmaximum erreicht wurde) gemessen.

### Bestimmung von Verbundspannungen

Zur Bestimmung der mit den Zwei-Komponenten-Systemen erzielten Referenzverbundspannungen wurde eine hochfeste Ankergewindestange M12 verwendet, die in ein hammergebohrtes Bohrloch mit einem Durchmesser von 14 mm und einer Bohrlochtiefe von 72 mm mit der erfindungsgemäßen und mit dem Speedmixer gemischten Zwei-Komponenten-Systeme in C20/25 Beton eingedübelt wurde. Nach einer Aushärtezeit von 72 h bei einer Temperatur von 23°C wurde die Versagenslast durch zentrisches Ausziehen der Ankergewindestange mit enger Abstützung ermittelt. Die mittlere Versagenslast wurde anhand der Ergebnisse von fünf Ankern bestimmt.

**Tabelle 1: Beispiele A1-A7**

| | **Beispiele (Gewichtsanteile)** | | | | | | |
|---|---|---|---|---|---|---|---|
| **Bestandteile** | **A1¹⁾** | **A2¹⁾** | **A3** | **A4** | **A5** | **A6** | **A7** |
| **A-Komponente** | | | | | | | |
| Epoxidharzkomponente Hilti HIT-RE 500 V3 (A) | 95.0 | 90.0 | 98.0 | 95.0 | 90.0 | 95.0 | 90.0 |

| **B-Komponente** | | | | | | | |
|---|---|---|---|---|---|---|---|
| 2-Ethylimidazol | 5.0 | 10.0 | - | - | - | - | - |
| 1,2-Dimethylimidazol | - | - | 2.0 | 5.0 | 10.0 | - | - |
| 1-Benzyl-2-Methylimidazol | - | - | - | - | - | 5.0 | 10.0 |
| | | | | | | | |
| ShoreD Härte (Aushärtedauer) | 85-90 (96 h) | 85-90 (96 h) | 85-90 (96 h) | 85-90 (96 h) | 85-90 (96 h) | 85-90 (96 h) | 85-90 (96 h) |

| | | | | | | | |
|---|---|---|---|---|---|---|---|
| 1) Vergleichsbeispiel | | | | | | | |

Die Testergebnisse der (Vergleichs)Beispiele A1-A7 zeigen, dass der erfindungsmäße Einsatz eines tertiären Amins (1,2-Dimethylimidazol; 1-Benzyl-2-Methylimidazol) in der Komponente (B) nach einer Aushärtedauer von 96 h zu genauso guten Härten führt wie der übliche Einsatz eines primären Amins (2-Ethylimidazol).

**Tabelle 2: Beispiele B1-B7**

| | **Beispiele (Gewichtsanteile)** | | | | | | |
|---|---|---|---|---|---|---|---|
| **Bestandteile** | **B1** | **B2** | **B3** | **B4** | **B5** | **B6** | **B7** |
| **A-Komponente** | | | | | | | |
| Epoxidharzkomponente Araldite BY 20157 CH | 75.0 | 75.0 | 75.0 | 95.0 | 80.0 | 80.0 | 58.8 |
| B-Komponente | | | | | | | |
| 1,2-Dimethylimidazol | 20.0 | 20.0 | 20.0 | - | - | 10.0 | 27.4 |
| 2,4,6⁻Tris(dimethylamino-methyl)phenol | 5.0 | - | - | - | - | - | - |
| 33% 1,4-Diazabicyclo[2.2.2]-octan / 67% Dipropylenglycol (PUR 812) | - | 5.0 | - | 5.0 | 20.0 | 10.0 | 13.8 |
| 8-Diazabicyclo[5.4.0]undec-7-en | - | - | 5.0 | - | - | - | - |
| | | | | | | | |
| ShoreD Härte (Aushärtedauer) | 80-85 (24 h) | 75-85 (24 h) | 80-90 (48 h) | 75-85 (72 h) | 65-75 (15 h) | 60-70 (48 h) | 60-70 (48 h) |

Die Testergebnisse der Beispiele B1-B7 zeigen, dass Epoxidharzkomponenten mit einer Reihe an unterschiedlichen tertiären Aminen in der Komponente (B) ausgehärtet werden können. Während die Aushärtung je nach Komponentenmischung 24 bis 96 h dauert, kann mit 1,4-Diazabicyclo[2.2.2]octan (Beispiel B5) die Aushärtedauer auf 15 h reduziert werden.

**Tabelle 3: Beispiele C1-C3**

| | **Beispiele (Gewichtsanteile)** | | | |
|---|---|---|---|---|
| **Bestandteile** | **Referenz** | **C1** | **C2** | **C3** |
| A-Komponente | | | | |
| Epoxidharzkomponente Hilti HIT-RE 100 (A) | 77.0 | 95.8 | 80.0 | 80.0 |
| B-Komponente | | | | |
| Härterkomponente Hilti HIT-RE 100 (B) | 23.0 | - | - | - |
| 1,4-Diazabicyclo[2.2.2]octan | - | 4.2 | 4.2 | 4.2 |
| Dipropylenglycol | - | - | 9.8 | - |
| Benzylalkohol | - | - | - | 9.8 |
| Quarz | - | - | 5.0 | 5.8 |
| Kieselsäure | - | - | 1.0 | 0.2 |
| | | | | |
| ShoreD Härte (4 h) | 84 | 82 | 21 | 0 |
| ShoreD Härte (6 h) | 84 | 86 | 57 | 23 |
| ShoreD Härte (7 h) | 84 | 82 | 76 | 58 |
| ShoreD Härte (24 h) | 84 | 85 | 85 | 84 |
| t_{+10K} in min | n.v. | 12 | 3 | 2 |
| Tₘₐₓ in°C | n.v. | 166 | 156 | 164 |
| t_{Tmax} in min | n.v. | 42 | 17 | 14 |
| Referenzverbundspannung in N/mm² (72 h) | 38.3 | 15.6 | 34.2 | 26.2 |

Die Testergebnisse der Beispiele C1-C3 zeigen, dass 1,4-Diazabicyclo[2.2.2]octan sowohl fest als auch flüssig formuliert mit Quarz und Kieselsäure in Dipropylenglycol oder Benzylalkohol die Epoxidharzkomponente nach spätestens 24 h härtet. Durch die Verwendung des 1,4-Diazabicyclo[2.2.2]octan als Feststoff (Beispiel C1) wird eine sehr hohe ShoreD Härte bereits nach 4 h erreicht. Die Beispiele C2 und C3 zeigen überraschend hohe Referenzverbundspannungen.

**Tabelle 4: Beispiele D1-D7:**

| | | | **Beispiele (Gewichtsanteile)** | | | | |
|---|---|---|---|---|---|---|---|
| **Bestandteile** | **D1** | **D2** | **D3** | **D4** | **D5** | **D6** | **D7** |
| **A-Komponente** | | | | | | | |
| Epoxidharzkomponente Hilti HIT-RE 100 (A) | 93.0 | 93.0 | 91.4 | 88.6 | 80.0 | 80.0 | 80.0 |

| **B-Komponente** | | | | | | | |
|---|---|---|---|---|---|---|---|
| N,N,N',N'-Tetramethylethylendiamin | 4.9 | - | - | - | - | - | - |
| N,N,N',N",N"-Pentamethyldiethylentriamin | - | 4.9 | - | - | - | - | - |
| 2,4,6-Tris(dimethylaminomethyl)phenol | - | - | 6.0 | 8.0 | 14.0 | - | - |
| 1,2-Dimethylimidazol | - | - | - | - | - | 14.0 | - |
| 1-Benzyl-2-Methylimidazol | - | - | - | - | - | - | 14.0 |
| Quarz | 2.0 | 2.0 | 2.5 | 3.3 | 5.8 | 5.8 | 5.8 |
| Kieselsäure | 0.1 | 0.1 | 0.1 | 0.1 | 0.2 | 0.2 | 0.2 |
| | | | | | | | |
| ShoreD Härte (4 h) | 0 | 0 | n.v. | n.v. | 0 | 0 | 0 |
| ShoreD Härte (6 h) | 36 | 25 | n.v. | n.v. | 43 | 0 | 0 |
| ShoreD Härte (7 h) | 70 | 53 | n.v. | n.v. | 44 | 0 | 0 |
| ShoreD Härte (24 h) | 84 | 84 | n.v. | n.v. | 82 | 0 - | 0 - |
| t_{+10K} in min | 94 | 119 | n.v. | n.v. | 20 | | |
| Tₘₐₓ in°C | 125 | 115 | n.v. | n.v. | 38 | 32 | 29 |
| tₜₘₐₓ in min | 148 | 184 | n.v. | n.v. | 39 | 1310 | 1690 |
| Referenzverbundspannung in N/mm² (72 h) | 29.3 | 27.0 | 23.3 | 30.4 | 32.4 | 23.9 | 26.3 |

Die Testergebnisse der Beispiele D1-D7 zeigen, dass mit unterschiedlichen tertiären Aminen hohe Verbundspannungen und eine Aushärtung nach bereits 24 h erreicht werden kann.

**Tabelle 5: Beispiele E1-E6:**

| | **Beispiele (Gewichtsanteile)** | | | | | |
|---|---|---|---|---|---|---|
| **Bestandteile** | **E1¹⁾** | **E2¹⁾** | **E3¹⁾** | **E4¹⁾** | **E5¹⁾** | **E6** |
| **A-Komponente** | | | | | | |
| Epoxidharzkomponente Hilti HIT-RE 100 (A) | 79.2 | 73.8 | 68.7 | 69.6 | 72.7 | 73.5 |
| B-Komponente | | | | | | |
| 1,4-Diazabicyclo[2.2.2]octan | 4.2 | - | - | 3.7 | 3.8 | - |
| Dipropylenglycol | 9.7 | - | - | - | - | - |
| 33% 1,4-Diazabicyclo[2.2.2]-octan / 67% Dipropylenglycol (DABCO 33-LV) | - | 13.1 | 12.2 - | | - | 13.1 |
| 1,3-Cyclohexandimethanamin | 1.0 | 2.9 | 9.5 | - | - | - |
| Isophorondiamin | - | - | - | 17.7 | - | - |
| m-Xylylendiamin | - | - | - | - | 15.3 | - |
| Pentaerythritoltetra(3-mercaptopropionat) | - | - | - | - | - | 3.2 |
| Quarz | 5.0 | 9.5 | 8.9 | 8.2 | 7.4 | 9.5 |
| Kieselsäure | 1.0 | 0.7 | 0.7 | 0.9 | 0.8 | 0.7 |
| | | | | | | |
| ShoreD Härte (4 h) | 21 | n.v. | n.v. | 62 | 76 | 16 |
| ShoreD Härte (6 h) | 64 | n.v. | n.v. | 76 | 82 | 74 |
| ShoreD Härte (7 h) | 77 | n.v. | n.v. | 81 | 83 | 80 |
| ShoreD Härte (24 h) | 85 | n.v. | n.v. | 85 | 84 | 83 |
| t_{+10K} in min | 2 | 3 | 3 | 17 | 7 | <1 |
| Tₘₐₓ in °C | 154 | 152 | 161 | 164 | 161 | 158 |
| hₘₐₓ in min | 16 | 14 | 11 | 39 | 16 | 3 |
| Referenzverbundspannung in N/mm² (72 h) | n.v. | 32.5 | 26.8 | 24.3 | 16.8 | n.v. |

| | | | | | | |
|---|---|---|---|---|---|---|
| 1) Vergleichsbeispiel | | | | | | |

Die Testergebnisse der (Vergleichs)Beispiele E1-E6 zeigen, dass unter Zugabe von Thiolen als Co-Härtern (Beispiel E6) die Zwei-Komponenten-Systeme schnell aushärten und hohe Verbundspannungen erzielen.

**Tabelle 6: Beispiele F1-F7:**

| | **Beispiele (Gewichtsanteile)** | | | | | | |
|---|---|---|---|---|---|---|---|
| **Bestandteile** | **F1** | **F2** | **F3** | **F4** | **F5** | **F6** | **F7** |
| **A-Komponente** | | | | | | | |
| Epoxidharzkomponente Hilti HIT-RE 100 (A) | 94.6 | 89.3 | 85.7 | 80.0 | 74.3 | 68.6 | 62.9 |
| **B-Komponente** | | | | | | | |
| 1,4-Diazabicyclo[2.2.2]octan | 1.0 | 2.0 | 3.0 | 4.2 | 5.4 | 6.6 | 7.8 |
| Dipropylenglycol | 2.0 | 4.0 | 7.0 | 9.8 | 12.7 | 15.5 | 18.3 |
| Quarz | 2.2 | 5.4 | 3.6 | 5.0 | 6.4 | 7.8 | 9.2 |
| Kieselsäure | 0.2 | 0.3 | 0.7 | 1.0 | 1.3 | 1.6 | 1.9 |
| | | | | | | | |
| t_{+10K} in min | n.v. | n.v. | 5 | 3 | 2 | 2 | 1.5 |
| Tₘₐₓ in °C | n.v. | n.v. | 116 | 156 | 158 | 150 | 141 |
| t_{Tmax} in min | n.v. | n.v. | 85 | 17 | 10 | 7 | 6 |
| Referenzverbundspannung in N/mm² (72 h) | 1.3 | 24.0 | 28.0 | 34.2 | 24.0 | 11.1 | 1.4 |

Die Testergebnisse der Beispiele F1-F7 zeigen, dass bei Verwendung von 1,4-Diazabicyclo[2.2.2]octan die Verbundspannung vom Massenanteil des Härters abhängt. Die höchste Verbundspannung wird mit 4.2 Gew.-% 1,4-Diazabicyclo[2.2.2]octan erreicht.

## Patentansprüche

1. Zwei-Komponenten-System für Klebeanwendungen, umfassend:
eine Komponente (A), umfassend ein Epoxid mit zwei oder mehr Epoxidgruppen, und
eine Komponente (B), umfassend ein tertiäres Amin,
wobei das Zwei-Komponenten-System kein primäres und kein sekundäres Amin umfasst.

2. Zwei-Komponenten-System gemäß Anspruch 1, wobei das von der Komponente (A) umfasste Epoxid und das von der Komponente (B) umfasste tertiäre Amin in einem nicht-stöchiometrischen Verhältnis vorliegen.

3. Zwei-Komponenten-System gemäß mindestens einem der vorhergehenden Ansprüche, wobei das tertiäre Amin basierend auf dem Gesamtgewicht des Zwei-Komponenten-Systems in einem Anteil von 0,5 bis 30 Gew.-% enthalten ist.

4. Zwei-Komponenten-System gemäß mindestens einem der vorhergehenden Ansprüche, wobei das tertiäre Amin zwei oder mehr tertiäre Aminogruppen aufweist.

5. Zwei-Komponenten-System gemäß mindestens einem der vorhergehenden Ansprüche, wobei das tertiäre Amin aus 1,4-Diazabicyclo[2.2.2]octan, 1,2-Dimethylimidazol, 1-Benzyl-2-Methylimidazol, 8-Diazabicyclo[5.4.0]undec-7-en, N,N,N',N'-Tetramethylethylendiamin, N,N,N',N",N"-Pentamethyldiethylentriamin und 2,4,6-Tris(dimethylaminomethyl)phenol ausgewählt ist und bevorzugt 1,4-Diazabicyclo[2.2.2]octan ist.

6. Zwei-Komponenten-System gemäß mindestens einem der vorhergehenden Ansprüche, wobei die Komponente (B) einen einwertigen, zweiwertigen oder mehrwertigen Alkohol umfasst, bevorzugt einen zweiwertigen Alkohol.

7. Zwei-Komponenten-System gemäß Anspruch 6, wobei der Alkohol Dipropylenglycol ist.

8. Zwei-Komponenten-System gemäß mindestens einem der vorhergehenden Ansprüche, wobei die Komponente (B) einen mineralischen Füllstoff umfasst.

9. Zwei-Komponenten-System gemäß Anspruch 8, wobei der mineralische Füllstoff Quarz oder Kieselsäure ist.

10. Zwei-Komponenten-System gemäß mindestens einem der vorhergehenden Ansprüche, wobei die Komponente (B) ein Thiol umfasst.

11. Zwei-Komponenten-System gemäß mindestens einem der vorhergehenden Ansprüche, wobei das tertiäre Amin 1,4-Diazabicyclo[2.2.2]octan ist, welches basierend auf dem Gesamtgewicht des Zwei-Komponenten-Systems in einem Anteil von 0,5 bis 30 Gew.-% enthalten ist, und wobei die Komponente (B) Dipropylenglycol umfasst.

12. Chemischer Dübel, umfassend eine physische Mischung der Komponenten (A) und (B) eines Zwei-Komponenten-System für Klebeanwendungen gemäß mindestens einem der Ansprüche 1 bis 11.

13. Ausgehärtetes System, umfassend einen chemischen Dübel gemäß Anspruch 12.

14. Verfahren zur Herstellung eines chemischen Dübels aus einem Zwei-Komponenten-System für Klebeanwendungen gemäß mindestens einem der Ansprüche 1 bis 11, umfassen die Schritte:
- getrenntes Bereitstellen von Komponente (A) und Komponente (B), und
- anschließendes Vermischen von Komponente (A) und Komponente (B).

15. Verwendung eines Zwei-Komponenten-Systems für Klebeanwendungen gemäß mindestens einem der Ansprüche 1 bis 11 zum chemischen Verkleben oder Verankern, bevorzugt zum chemischen Verankern in einem mineralischen Substrat, insbesondere in Beton oder Mauerwerk, und/oder Holz.
